# EUROPÄISCHE PATENTANMELDUNG

(11) **EP 1 973 024 A1**
(43) Veröffentlichungstag der Anmeldung: **24.09.2008**
(21) Anmeldenummer: 07023321.8
(22) Anmeldetag: 01.12.2007
(51) Int. Cl.: G05D 23/19

(54) **Temperatur-Einstellmittel**

(30) Priorität: 22.03.2007 DE 102007013679
(71) Anmelder: Robert Bosch GmbH, 70442 Stuttgart (DE)
(72) Erfinder: Cardoso, Pedro, Sta. Joana 3800-810 Aveiro (PT); Guerreiro, João, 4710-346 Braga (PT)

(57) **Zusammenfassung**

Die Erfindung betrifft Temperatur-Einstellmittel, insbesondere für die manuelle Einstellung eines Temperatursollwertes bei Vorrichtungen für die Trinkwarmwasserbereitung, Trinkwarmwasserzapfung, Raumheizwärmeerzeugung und/oder Raumheizwärmebereitstellung.

Der Erfindung liegt die Aufgabe zu Grunde, Temperatur-Einstellmittel zu schaffen, die Anwendern ein unmittelbares Verständnis für die Auswirkung ihrer Betätigung ermöglichen.

Die Erfindung ist gekennzeichnet durch eine im oder am Temperatur-Einstellmittel vorgesehene Kontaktfläche mit zugeordneten kombinierten Heiz-Kühl-Elementen, die dem Anwender eine durch Berührung erfassbare, dem Temperatursollwert entsprechende Temperaturwahrnehmung vermittelt, wobei die Heiz-Kühl-Elemente entsprechend der manuellen Temperatureinstellung mit variierbarer Heiz- und/oder Kühlleistung reagieren.

## Beschreibung

Die Erfindung betrifft Temperatur-Einstellmittel nach dem Oberbegriff des Patentanspruches 1.
Temperatur-Einstellmittel für die manuelle Einstellung eines Temperatursollwertes finden in vielfältigen Zusammenhängen Anwendung, wie z.B. bei Heizgeräten für die Trinkwarmwasserbereitung, aber auch an einer Trinkwasserzapfstelle selbst, des Weiteren an Heizgeräten für die Raumheizwärmeerzeugung, aber auch an Heizkörpern zur Übertragung der in einem Heizmedium geförderten Wärme an einen Aufstellraum. Die vorliegende Erfindung geht von manuell zu betätigenden Einstellmitteln aus, die in unterschiedlichen Gestaltungen bekannt sind. So gibt es an Heizgeräten Drehknöpfe und Drucktaster, an Trinkwasserzapfstellen gibt es Ventilgriffe und Hebel von Einhandmischern, während bei Raumheizkörpern Schieber, Ventilgriffe und Thermostatventilgriffe bekannt sind.
Üblicherweise liegt diesen Temperatur-Einstellmitteln ein abstraktes Analogiekonzept zu Grunde, das auf Zahlen (0, 1, 2, usw.), Symbolen (Eiskristall, Mondsichel, Sonne, Plus- und Minus-Zeichen, usw.) und/oder Farben (blau, orange, rot) basiert, die einem Temperatursollwert zugeordnet sind.
Die Erwartungshaltung des Anwenders im Hinblick auf eine gewünschte Warmwasser- oder Raumtemperatur lässt sich aber nicht oder nur sehr unzureichend mit den abstrakten Zahlen, Symbolen oder Farben beschreiben.

Der Erfindung liegt die Aufgabe zu Grunde, Temperatur-Einstellmittel zu schaffen, die Anwendern ein unmittelbares Verständnis für die Auswirkung ihrer Betätigung ermöglichen.

Erfindungsgemäß wird dies mit einem Temperatur-Einstellmittel mit den Merkmalen des Patentanspruches 1 gelöst. Vorteilhafte Weiterbildungen sind den Unteransprüchen zu entnehmen.

Das Temperatur-Einstellmittel ist gekennzeichnet durch eine im oder am Temperatur-Einstellmittel vorgesehene Kontaktfläche mit zugeordneten kombinierten Heiz-Kühl-Elementen. Diese Kontaktfläche kann der Anwender mit der Hand berühren, wobei ihm über die Kontaktflächentemperatur eine dem eingestellten Temperatursollwert entsprechende Temperaturwahrnehmung vermittelt wird. Die Heiz-Kühl-Elemente reagieren entsprechend der manuellen Temperatureinstellung mit variierbarer Heiz- und/oder Kühlleistung. Eine mit dem Temperatur-Einstellmittel manuell vorgebbare Betätigungsrichtung und ein vorgebbarer Betätigungsweg (so z.B. bei Schiebern, Drehknöpfen, usw. - bei Plus/Minus-Drucktastern entsprechend eine Schrittzahl) haben über die Einstellung eines Temperatursollwertes hinaus Auswirkungen auf die Heiz- und/oder Kühlleistung der kombinierten Heiz-Kühl-Elemente. Die Betätigungsrichtung entscheidet über das Vorzeichen und der Betätigungsweg oder die Schrittzahl über den Betrag der Temperaturänderung der Kontaktfläche. Die Temperaturänderung der Kontaktfläche erfolgt in Vorzeichen und Betrag schnell und ohne Zeitverzug zur Verstellung des Temperatur-Einstellmittels. Bei der vom Anwender wahrnehmbaren Kontaktflächentemperatur handelt es sich um einen den Temperatursollwert repräsentierenden Wert. Dieser repräsentierende Wert kann entweder der eigentliche Temperatursollwert selbst sein. Aus Gründen der menschlichen Wahrnehmungsfähigkeit kann es sich aber auch um einen vom Anwender als gleichwertig empfundenen, vom Temperatursollwert abweichenden Temperaturwert handeln. Die Temperatur-Einstellmittel sind von Hand zu bedienende Stelleinrichtungen wie Drehknöpfe, Drucktaster, Schieber, Ventilgriffe, Thermostatventilgriffe und/oder die Hebel von Einhandmischern. Die Kontaktfläche ist bei einer Ausführungsart an der Oberfläche der Temperatur-Einstellmittel angeordnet, liegt also an der Oberfläche des beim Einstellen berührten Drehknopfes, Drucktasters, usw. Bei einer zweiten Ausführungsart ist die Kontaktfläche in einem dem Temperatur-Einstellmittel benachbarten Bereich angeordnet, liegt also beispielsweise in einem besonderen Feld direkt unter dem Drehknopf, Drucktaster, usw. Die Heiz- und/oder Kühlfunktion der kombinierten Heiz-Kühl-Elemente wird mit thermoelektrischen Generatoren, zum Beispiel Peltier-Elementen, realisiert. Eine Regeleinrichtung überwacht mit Hilfe eines Temperaturfühlers die Kontaktflächentemperatur und regelt die Heiz- und/oder Kühlleistung der kombinierten Heiz-Kühl-Elemente. Aus Gründen der Energieeinsparung schaltet die Regeleinrichtung die Heiz- und/oder Kühlleistung der kombinierten Heiz-Kühl-Elemente in Abhängigkeit der manuell erfolgenden Betätigung des Temperatur-Einstellmittels ein und aus, wobei die Heiz- und/oder Kühlleistung lediglich bei Betätigung und während einer sich anschließenden vorgebbaren Zeitdauer aktiviert und sonst außer Betrieb gesetzt ist.

Das erfindungsgemäße Temperatur-Einstellmittel bietet den Vorteil, dem Anwender einen unmittelbaren Eindruck über die Auswirkungen seiner Betätigung zu vermitteln, und macht die üblichen abstrakten Konzepte zur Veranschaulichung von möglichen Temperatursollwerten durch Zeichen und Symbole überflüssig.

## Patentansprüche

1. Temperatur-Einstellmittel, insbesondere für die manuelle Einstellung eines Temperatursollwertes bei Vorrichtungen für die Trinkwarmwasserbereitung, Trinkwarmwasserzapfung, Raumheizwärmeerzeugung und/oder Raumheizwärmebereitstellung,
**dadurch gekennzeichnet, dass** im oder am Temperatur-Einstellmittel eine Kontaktfläche mit zugeordneten kombinierten Heiz-Kühl-Elementen vorgesehen ist, die dem Anwender eine durch Berührung erfassbare, dem Temperatursollwert entsprechende Temperaturwahrnehmung vermittelt, wobei die Heiz-Kühl-Elemente entsprechend der manuellen Temperatureinstellung mit variierbarer Heiz- und/oder Kühlleistung reagieren.

2. Temperatur-Einstellmittel nach Anspruch 1,
**dadurch gekennzeichnet, dass** eine mit dem Temperatur-Einstellmittel manuell vorgebbare Betätigungsrichtung und/oder ein vorgebbarer Betätigungsweg oder eine Schrittzahl zur Einstellung eines Temperatursollwertes Auswirkungen auf die Heiz- und/oder Kühlleistung der kombinierten Heiz-Kühl-Elemente haben, wobei die Betätigungsrichtung über ein Vorzeichen und der Betätigungsweg oder die Schrittzahl über einen Betrag der Temperaturänderung der Kontaktfläche entscheidet, und wobei die Temperaturänderung der Kontaktfläche in Vorzeichen und Betrag zeitnah zur Verstellung des Temperatur-Einstellmittels erfolgt.

3. Temperatur-Einstellmittel nach Anspruch 1 oder 2,
**dadurch gekennzeichnet, dass** es sich bei der wahrnehmbaren, dem Anwender vermittelten Temperatur der Kontaktfläche um einen den Temperatursollwert repräsentierenden Wert handelt.

4. Temperatur-Einstellmittel nach einem der Ansprüche 1 bis 3,
**dadurch gekennzeichnet, dass** es sich bei den Temperatur-Einstellmitteln um von Hand zu bedienende Stelleinrichtungen wie Drehknöpfe, Drucktaster, Schieber, Ventilgriffe, Thermostatventilgriffe und/oder die Hebel von Einhandmischern handelt.

5. Temperatur-Einstellmittel nach einem der Ansprüche 1 bis 4,
**dadurch gekennzeichnet, dass** die Kontaktfläche an der Oberfläche der Temperatur-Einstellmittel angeordnet ist.

6. Temperatur-Einstellmittel nach einem der Ansprüche 1 bis 5,
**dadurch gekennzeichnet, dass** die Kontaktfläche in einem dem Temperatur-Einstellmittel benachbarten Bereich angeordnet ist.

7. Temperatur-Einstellmittel nach einem der Ansprüche 1 bis 6,
**dadurch gekennzeichnet, dass** die Heiz- und/oder Kühlfunktion der kombinierten Heiz-Kühl-Elemente mit thermoelektrischen Generatoren, z.B. Peltier-Elementen, realisiert wird.

8. Temperatur-Einstellmittel nach einem der Ansprüche 1 bis 7,
**dadurch gekennzeichnet, dass** eine Regeleinrichtung mithilfe eines Temperaturfühlers die Temperatur der Kontaktfläche überwacht und die Heiz- und/oder Kühlleistung der kombinierten Heiz-Kühl-Elemente regelt.

9. Temperatur-Einstellmittel nach einem der Ansprüche 1 bis 8,
**dadurch gekennzeichnet, dass** die Regeleinrichtung die Heiz- und/oder Kühlleistung der kombinierten Heiz-Kühl-Elemente in Abhängigkeit der manuell erfolgenden Betätigung des Temperatur-Einstellmittels ein- und ausschaltet, wobei die Heiz- und/oder Kühlleistung lediglich bei Betätigung und während einer sich anschließenden vorgebbaren Zeitdauer aktiviert und sonst aus Gründen der Energieeinsparung außer Betrieb gesetzt ist.
